Europäisches Patentamt

European Patent Office

Office européen des brevets

(11) Publication number: **0 159 793**
**B1**

(12) **EUROPEAN PATENT SPECIFICATION**

(45) Date of publication of patent specification: **29.07.87**

(21) Application number: **85301766.3**

(22) Date of filing: **14.03.85**

(51) Int. Cl.⁴: **B 62 D 11/08,** B 60 T 11/20

(54) A vehicle hydraulic braking system.

(30) Priority: **29.03.84 GB 8408166**

(43) Date of publication of application:
**30.10.85 Bulletin 85/44**

(45) Publication of the grant of the patent:
**29.07.87 Bulletin 87/31**

(84) Designated Contracting States:
**DE FR IT**

(56) References cited:
**EP-A-0 030 883
EP-A-0 047 702
EP-A-0 057 640
DE-A-1 580 103
DE-A-2 059 037
FR-A-1 559 312
FR-A-2 122 609
GB-A-2 098 687
GB-A-2 113 786
US-A-3 441 319**

(73) Proprietor: **LUCAS INDUSTRIES
public limited company
Great King Street
Birmingham, B19 2XF West Midlands (GB)**

(72) Inventor: **Price, Anthony George
14 Meadow lane Croesyceiliog
Cwmbran Gwent NP44 2EY Wales (GB)**

(74) Representative: **Spall, Christopher John et al
BARKER, BRETTELL & DUNCAN
138 Hagley Road
Edgbaston Birmingham B16 9PW (GB)**

Courier Press, Leamington Spa, England.

## Description

This invention relates to vehicle hydraulic braking systems of the kind in which separate master cylinders are operable simultaneously to apply brakes on both sides of a vehicle to retard the vehicle and operate auxiliary braking means, for example brakes on a trailer, and are operable independently to apply the brakes on one side of the vehicle to facilitate steering of the vehicle, means being provided for preventing operation of the auxiliary braking means when one master cylinder is operated on its own.

Where used herein the term "master cylinder" is intended to cover constructions in which a pedal operates a piston to pressurise hydraulic fluid in a pressure space and to constructions in which a pedal is operative to operate a valve for controlling the supply of pressurised fluid to a pressure space, either from a source of high pressure fluid, or by throttling a supply of fluid which is normally circulated through the pressure space in a closed circuit at low pressure.

In our GB—A—2098687 corresponding to the preamble of claim 1 we have described an hydraulic system of the kind set forth in which each master cylinder is of tandem construction having a primary pressure space in front of a pedal-operated primary piston and which is connected to the brakes on wheels on one side of the vehicle, a secondary pressure space in front of a secondary piston and which is connected to the auxiliary braking means through a common connection with the secondary pressure space of the other master cylinder, and normally-open recuperation valves connecting the respective pressure spaces to a reservoir for fluid, movement of the primary and secondary pistons in a brake-applying direction being operative to close the two recuperation valves whereafter to pressurise the fluid in the pressure spaces. When both master cylinders are operated simultaneously, the pressure spaces of both master cylinders are pressurised and the primary pressure spaces are interconnected by transfer valve means to equalise the pressure applied to the brakes on opposite sides of the vehicle in order to compensate for wear of the friction linings but when one master cylinder is operated on its own fluid from the secondary pressure space of that master cylinder is returned to the reservoir through the secondary recuperation valve of the other master cylinder, which is open, and the transfer valve means is operative to isolate the two primary pressure spaces from each other.

In the specific construction of our GB—A—2098687 the auxiliary braking means, which comprises brakes on a trailer, is operated by the direct displacement of fluid from the secondary pressure spaces, which must therefore be of sufficient volume to accommodate an adequate quantity of hydraulic fluid. The transfer valve means comprises a pair of separate transfer valves which are interconnected by a transfer passage and each transfer valve is housed in a wall of a respective master cylinder and comprises a valve member for co-operation with a seating surrounding a radial port in the wall. When both master cylinders are operated simultaneously, the primary pistons are operative to urge the two valve members away from the seatings so that the two pressure spaces are placed in open communication through the transfer passage, and when one master cylinder is operated on its own the pressure from the primary pressure space is operative to urge the valve member of the transfer valve of the other master cylinder into engagement with its seating to ensure that the two primary pressure spaces are isolated from each other. The primary pistons must therefore be of sufficient length to cooperate with the valve members in order to open the respective transfer valves.

According to our invention in a master cylinder assembly for a vehicle hydraulic braking system comprising a pair of master cylinders which are adapted to be operated simultaneously to effect retardation of a vehicle and independently to assist steering, each master cylinder comprises a pedal-operated primary piston working in a bore, a secondary or floating piston working in a portion of the bore between the primary piston and a closed end of the bore, a primary pressure space defined in the bore between the primary and secondary pistons, and a secondary pressure space defined in the bore between the secondary piston and the closed end of the bore, the primary pressure spaces are adapted to be connected to brakes on wheels on opposite sides of the vehicle, the secondary pressure spaces are operative to control operation of a common auxiliary braking system, which is adapted to be operated only when the two master cylinders are operated simultaneously, each secondary piston being provided with passage means in communication at all times with a reservoir for fluid, and normally open primary and secondary recuperation valves provide communication between the passage means and the primary and secondary pressure spaces when the pistons are in their retracted positions, simultaneous operation of both master cylinders causing both pairs of primary and secondary recuperation valves to close followed by pressurisation of the fluid in both pairs of primary and secondary pressure spaces whereby to apply simultaneously the brakes on opposite sides of the vehicle and to operate the auxiliary braking system, and operation of one of the master cylinders on its own causing the primary and secondary recuperation valves of that master cylinder to close followed by pressurisation of the fluid in the primary pressure space but with fluid in the secondary pressure space being displaced to the reservoir through the open secondary recuperation valve of the other, inoperative, master cylinder, whereby to prevent operation of the auxiliary braking system, and a control valve assembly is provided to control communication between the brakes on opposite sides of the vehicle, and between the said brakes and the auxiliary braking system, the valve assembly being normally closed to isolate the brakes on opposite sides of the vehicle from each other when one master cylinder is operated on its own, but being opened in response to pressure generated in the secondary pressure spaces when both master cylinders are operated simultaneously, whereby to place the brakes on opposite sides of vehicle in communication both with each other and with the auxiliary braking system.

The control valve assembly acts as a transfer valve to provide communication between the brakes on wheels on opposite sides of the vehicle to compensate for differential wear of the frictions linings, and enables the auxiliary braking system to be operated by fluid from the primary pressure spaces of the two master cylinders.

The provision of the control valve assembly has the advantages of enabling us to reduce the effective volumes of the two secondary pressure spaces since only a relative small volume of fluid has to be displaced in order to open the control valve assembly, and the volumes of the secondary pressure spaces can be standardised to cater for the requirements of a specific control valve assembly. In other words the capacity of the two secondary pressure spaces need only be sufficient to generate a signal pressure of a magnitude sufficient to open the control valve assembly, whereafter the auxiliary braking system is operated by pressure from the two primary pressure spaces. Since no transfer valves operated by the primary pistons are provided, the effective lengths of the primary pistons can be correspondingly reduced. The conservation of space by the reduction in the volume of the two secondary pressure spaces and the reduction in the lengths of the primary pistons means that the overall lengths of the master cylinders are of similar complementary lengths. The assembly of the two master cylinders is relatively more compact and therefore lighter and cheaper to produce.

Conveniently the control valve assembly comprises a housing having an axial bore, a valve member, suitably in the form of a spool or piston, working in the axial bore, the housing also being provided with a pair of radial ports which communicate with the bore and each of which is connected to the primary pressure space of a respective master cylinder and to the brake on the wheel on the corresponding side of the vehicle, and with an axial inlet port connected to both secondary pressure spaces and to the auxiliary braking system, and a spring for urging the valve member in a first direction to close both radial ports and isolate the radial ports from the inlet port in opposition to pilot pressure in the secondary pressure spaces which, when both master cylinders are operated simultaneously, is operative to urge the valve member in the bore in a second direction opposite the first to place the three ports in communication with each other.

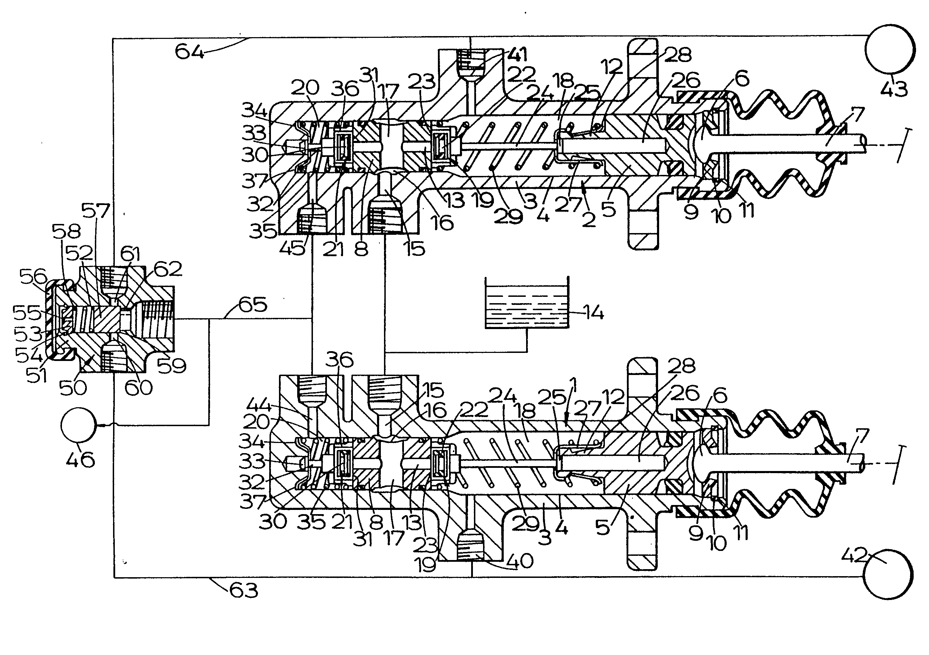

One embodiment of our invention is illustrated in the single Figure of the accompanying drawings which is a layout of an hydraulic braking system for a vehicle having an auxiliary braking system.

The braking system shown in the layout incorporates a dual master cylinder assembly which comprises two master cylinders 1 and 2. Since the master cylinders are identical in construction only the master cylinder 1 will be described in detail although, for convenience, corresponding reference numerals have been applied to corresponding parts of the two master cylinders 1 and 2.

The master cylinder 1 comprises a body 3 provided with a longitudinal bore 4 in which works a primary piston 5 engaged at its rear end by a part-spherical head 6 on a pedal-operated push-rod 7, and a secondary or floating piston 8 disposed between the piston 5 and the closed end of the bore 4. A stop for the head 6 is formed by an annular collar 9 located by a spring ring or circlip 10 received in an annular groove 11 in the bore 4.

The primary piston 5 is provided with a forward extension 12 of reduced diameter.

The secondary piston 8 has a longitudinally extending through bore 13 which is in communication at all times with a reservoir 14 for hydraulic fluid through a recuperation port 15 in the wall of the body 3, an annular passage 16 in the wall of the piston 8, and a diametral passage 17 in the piston 8 which traverses the bore 13.

A primary pressure space 18 defined in the bore 4 between the pistons 5 and 8 communicates with the reservoir 14 through a normally open primary recuperation valve 19, and a secondary pressure space 20 defined in the bore 4 between the secondary piston 8 and the closed end of the bore 4 communicates with the reservoir through a normally open secondary recuperation valve 21.

The recuperation valve 19 comprises a head 22 for engagement with a seating 23 surrounding the bore 13 at the adjacent end of the piston 8. The head 22 is carried by the forward end of an axially extending stem or rod 24 of which the opposite end carries an enlarged head 25 guided to slide in a longitudinally extending bore 26 in the adjacent end of the extension 12. The head 25 is retained within the bore 26 by a thimble 27 which fits over the extension 12. A flange 28 on the thimble 27 forms an abutment for one end of a compression return spring 29 of which the opposite end acts on a cage in which the head 22 is housed. In the position shown in the drawings the spring 29 urges the piston 5 into a retracted position with the head 22 spaced from the seating 23 by the engagement of the thimble 27 with the head 25.

The recuperation valve 21 comprises a head 30 for engagement with a seating 31 surrounding the opposite end of the bore 13 in the piston 8. The head 30 is carried by the rear end of a stem 32 of which the front end has an enlarged head 33 working in a portion of the bore 4 which is of reduced diameter. The head 33 is disposed on the opposite side of a plate 34 which is in abutment with a shoulder 37 at the step in diameter. The plate 34 engages with the head 33 and forms an abutment for one end of a compression spring 35 of which the opposite end engages with a cage 36 in which the head 30 is housed. In the position shown the spring 35 acts through the plate 34 to urge it into engagement with a shoulder 37 at the step in diameter and to hold the head 30 in a retracted position spaced from the seating 31.

Outlet ports 40 and 41 leading from the primary pressure spaces 18 of the respective master cylinder 1 and 2 are arranged to the brakes 42, 43 on wheels on opposite sides of the vehicle. Outlets ports 44 and 45 leading from the secondary pressure spaces 20 are connected to an auxiliary braking system 46.

A control valve assembly 50 is incorporated in the system. The valve assembly 50 comprises a housing 51 having a longitudinally extending stepped through-bore 52. The bore 52 is closed at its end of greater diameter by a plug 53 which is retained in position by means of a circlip 54 and has a through-bore 55. That end of the housing 51 is enclosed with sealing boot 56. A valve member comprising a spool or piston 57 works in the bore 52 and is normally urged by means of a compression spring 58 in abutment with the plug 53 into an advanced closed position defined by the engagement with a shoulder 59 at a step at the change in the diameter of the bore 52. In this position the valve member 57 isolates each of a pair of diametrically opposed radial ports 60, 61 in the housing 51 and communicating at their inner ends with the bore 52 from an axial inlet port 62 defined by the end of the bore 52 which is of smaller diameter.

The radial port 60 is connected to a pipe-line 63 leading both to the outlet port 40 of the master cylinder 1 and the brake 42, the radial port 61 is connected to a pipe-line 64 leading both to the outlet port 41 of the master cylinder 2 and the brake 43, and the inlet port 62 is connected to a pipe-line 65 leading both to both outlet ports 44 and 45 and the auxiliary braking system 46.

In the inoperative position shown in the drawings the pressure spaces 18 and 20 of both master cylinders are in communication with the reservoir 14 through the respective recuperation valves 19 and 21 which are open, and the control valve assembly 50 is in a closed position with the valve member held by the spring 58 against the shoulder 59 to close the inner ends of the three ports 60, 61 and 62, thereby isolating them from each other.

When both master cylinders are operated simultaneously a short forward movement of the pistons 5 and 8 with corresponding compression of the springs 29 and 35 is sufficient to cause the heads 22 and 30 to engage with the seatings 23 and 31 to isolate the reservoir 14 from both pressure spaces 18 and 20. Further movements of the pistons 5 in the same directions cause fluid to flow through the outlet ports 40, 41 to the brake on the wheels 42 and 43 and through the outlet ports 44 and 45 to the auxiliary braking system 46 and simultaneously to the inlet port 62 where that pressure urges the valve member 57 axially against the loading in the spring 58 to place the three ports 60, 61, and 62 in open communication with one other. Placing the two radial ports 60, 61 in communication with each other equalises the applied pressures to compensate for differential wear of the friction linings of the two brakes 42 and 43, and placing the three ports 60, 61 and 62 in communication with each other enables the auxiliary braking system 46 to be operated, or for the pressure to be augmented substantially, by pressure from the primary pressure spaces 18 of the two master cylinders 1 and 2.

Once the control valve assembly is in an open position with the three ports 60, 61 and 62 in communication, the valve assembly 50 will remain in this position so long as pressure is available in the brake circuits.

When one master cylinder is operated on its own, say the master cylinder 1, as before forward movement of the pistons 5 and 8 with corresponding compression of the springs 29, 35 is sufficient to cause the heads 22 and 30 to engage with the seatings 23 and 31 to isolate the reservoir 14 from both pressure spaces 18 and 20. Further movement of the pistons 5 and 8 in the same direction causes pressurised fluid to flow from the primary pressure space 18 to the brake 42 through the outlet port 40, but fluid from the secondary pressure space 20 is displaced to the reservoir 14, which is at atmospheric pressure, through the pressure space 20 and the open recuperation valve 21 of the other, non-actuated, master cylinder 2. Thus no signal pressure is generated and the control valve assembly 50 remains in its closed position with the valve member 57 held against the shoulder 59. The two radial ports 60 and 61 are therefore isolated from each other to prevent fluid from being transferred between the two brakes 42 and 43, and the radial ports 60 and 61 are isolated from the port 62 which prevents the auxiliary braking system 46 from being operated when one master cylinder 1 or 2 is operated on its own.

When the auxiliary braking system comprises brakes on opposite sides of a trailer, these brakes are inoperative when either of the brakes 42 or 43 on the vehicle is operated to facilitate steering or to enable the vehicle to execute a "spin-turn".

In a modification the auxiliary braking system may comprise auxiliary brakes on wheels on opposite sides of the vehicle itself.

**Claims**

A master cylinder assembly for a vehicle hydraulic braking system comprising a pair of master cylinders (1, 2) which are adapted to be operated simultaneously to effect retardation of a vehicle and independently to assist steering, in which each master cylinder (1, 2) comprises a pedal-operated primary piston (5) working in a bore (4), a secondary or floating piston (8) working in a portion of the bore (4) between the primary piston (5) and a closed end of the bore (4), a primary pressure space (18) defined in the bore (4) between the primary and secondary pistons (5, 8), and a secondary pressure space (20) defined in the bore (4) between the secondary piston (8) and the closed end of the bore (4), the primary pressure spaces (18) are adapted to be connected to brakes (42, 43) on wheels on opposite sides of the vehicle, the secondary pressure spaces (20) are operative to control operation of a common auxiliary braking system (46), which is adapted to be operated only when the two master cylinders (1, 2) are operated simultaneously, each secondary piston (8) being provided with passage means (17) in communication at all times with a reservoir for fluid (14), and normally open primary and secondary recuperation valves (19, 21) provide communication between the passage means (17) and the primary and secondary pressure spaces (18, 20) when the pistons (5, 8) are in their retracted positions, simultaneously operation of both master cylinders (1, 2) causing both pairs of primary and secondary recuperation valves (19, 21) to close followed by pressurisation of the fluid in both pairs of primary and secondary pressure spaces (18, 20) whereby to apply simultaneously the brakes (42, 43) on opposite sides of the vehicle and to operate the auxiliary braking system (46), and operation of one of the master cylinders (1, 2) on its own causing the primary and secondary recuperation valves (19, 21) of that master cylinder to close followed by pressurisation of the fluid in the primary pressure space (18) but with fluid in the secondary pressure space (20) being displaced to the reservoir (14) through the open secondary recuperation valve (21) of the other, inoperative, master cylinder (1, 2), whereby to prevent operation of the auxiliary braking system (46), and a control valve assembly (50) is provided to control communication between the brakes (42, 43) on opposite sides of the vehicle, characterised in that said valve assembly (50) controls communication between the said brakes (42, 43) and the auxiliary braking system (46) and is normally closed to isolate the brakes (42, 43) on opposite sides of the vehicle from each other, when one master cylinder (1, 2) is operated on its own, but is opened in response to pressure generated in the secondary pressure spaces (20) when both master cylinders (1, 2) are operated simultaneously, whereby to place the brakes (42, 43) on opposite sides of vehicle in communication both with each other and with the auxiliary braking system (46).

2. A master cylinder assembly according to claim 1 characterised in that the control valve assembly (50) acts as a transfer valve to provide communication between the brakes (42, 43) on wheels on opposite sides of the vehicle to compensate for differential wear of frictions linings, and enables the auxiliary braking system (46) to be operated by fluid from the primary pressure spaces (18) of the two master cylinders (1, 2).

3. A master cylinder assembly to claim 1 or 2 characterised in that the control valve assembly (50) comprises a housing (51) having an axial bore (52), a valve member (57) working in the axial bore (52), the housing (51) also being provided with a pair of radial ports (60, 61) which communicate with the bore (52) and each of which is connected to the primary pressure space (18) of a respective master cylinder (1, 2) and to the brake (42, 43) on the wheel on the corresponding side of the vehicle, and with an axial inlet port (62) connected to both secondary pressure spaces (20) and to the auxiliary braking system (46), and a spring (58) for urging the valve member (57) in a first direction to close both radial ports (60, 61) and isolate the radial ports (60, 61) from the inlet port (62) in opposition to pilot pressure in the secondary pressure spaces (20) which, when both master cylinders (1, 2) are operated simultaneously, is operative to urge the valve member (57) in the bore (52) in a second direction opposite the first to place the three ports (60, 61, 62) in communication with each other.

4. A master cylinder assembly according to any preceding claim characterised in that the valve member (59) comprises a spool.

5. A master cylinder assembly according to any preceding claim characterised in that the valve member (57) comprises a piston.

6. A master cylinder assembly according to any preceding claim characterised in that the auxiliary braking system (46) comprises auxiliary brakes on wheels on opposite sides of the vehicle itself.

**Patentansprüche**

1. Hauptzylinderanordnung für ein hydraulisches Fahrzeugbremssystem, mit zwei Hauptzylindern (1, 2) zur simultanen Betätigung zwecks Abbremsung eines Fahrzeuges und zur unabhänigegen Betätigung zur Unterstützung der Steuerung, wobei jeder Hauptzylinder (1, 2) einen durch Pedal betriebenen ersten, in einer Bohrung (4) arbeitenden Kolben (5) aufweist, einen zweiten oder freigehenden in einem Teil der Bohrung (4) zwischem dem ersten Kolben (5) und einem geschlossenen Ende der Bohrung (4) arbeitenden Kolben (8), mit einem in der Bohrung (4) zwischen dem ersten und zweiten Kolben (5, 8) definierten ersten Druckraum (18) und einem in der Bohrung (4) zwischen dem zweiten Kolben (8) und dem geschlossenen Ende der Bohrung (4) definierten zweiten Druckraum (20), wobei die ersten Druckräume (18) mit den Bremsen (42, 43) an Rädern an sich gegenüberliegenden Fahrzeugseiten verbunden werden können, die zweiten Druckräume (29) dem Steuervorgang eines üblichen Bremskraftverstärkersystems (46) dienen, welches nur bei simultaner Betätigung der beiden Hauptzylinder (1, 2) zu betätigen ist, jeder zweite Kolben (8) mit einem Durchgang (17) versehen ist, der ständig mit einem Behälter (14) für das Fluid verbunden ist, wobei normalerweise geöffnete erste und zweite Rückflußventile (19, 21) eine Verbindung zwischen dem Durchgang (17) und dem ersten und zweiten Druckraum (18, 20) schaffen, wenn sich die Kolben (5, 8) in ihrer zurückgezogenen Position befinden, wobei ein simultaner Betrieb beider Hauptzylinder (1, 2) das Schließen beider ersten und zweiten Rückflußventilpaare (19, 21) bewirkt gefolgt von einer Druckerhöhung des Fluides in den beiden ersten und zweiten Druckraumpaaren (18, 20) um die Bremsen (42, 43) an den sich gegenüberliegenden Fahrzeugseiten simultan zu betätigen und den Bremskraftverstärker (46) zu betätigen und wobei bei Betätigung nur eines der beiden Hauptzylinder (1, 2) das erste und zweite Rückflußventil (19, 21) dieses Hauptzylinders geschlossen werden, gefolgt von einer Druckerhöhung des Fluides in dem ersten Druckraum (18), wobei jedoch das Fluid aus dem zweiten Druckraum (20) in den Behälter (14) durch das offene zweite Rückflußventil (21) des anderen nicht betätigten Hauptzylinders (1, 2) verlagert wird, um eine Betätigung des Bremskraftverstärkersystems (46) zu verhindern, und mit einer Steuerventilanordnung (50) zur Steuerung der Verbindung zwischen dem Bremsen (42, 43) an gegenüberliegenden Fahrzeugseiten, dadurch gekennzeichnet, daß die Ventilanordnung (50) die Verbindung zwischen den Bremsen (42, 43) und dem Bremskraftverstärkersystem (46) steuert und normalerweise geschlossen ist um die Bremsen (42, 43) an gegenüberliegenden Fahrzeugseiten voneinander zu trennen, wenn nur ein Hautzylinder (1, 2) betätigt wird, aber durch Druckerzeugung in den zweiten Druckräumen (20) geöffnet wird, wenn beide Hauptzylinder (1, 2) simultan betätigt werden, wodurch die Bremsen (42, 43) an gegenüberliegenden Fahrzeugseiten sowohl miteinander als auch mit dem Bremskraftverstärkersystem (46) verbunden werden.

2. Hauptzylinderanordnung nach Anspruch 1, dadurch gekennzeichnet, daß die Steuerventilanordnung (50) als Übertragungsventil zur Schaffung einer Verbindung zwischen den Bremsen (42, 43) an Rädern an gegenüberliegenden Seiten des Fahrzeugs wirkt, um eine unterschiedliche Abnutzung der Bremsbeläge zu kompensieren, und den Betrieb des Bremskraftverstärkersystem (46) durch Fluid aud den ersten Druckräumen (18) der beiden Hauptzylinder (1, 2) ermöglicht.

3. Hauptzylinderanordnung nach Anspruch 1 oder 2, dadurch gekennzeichnet, daß das Steuerventilsystem (50) mit einem eine axiale Bohrung, (52) aufweisenden Gehäuse (51) ausgestattet ist, mit einem in der axialen Bohrung (52) arbeitenden Ventilteil (57), daß das Gehäuse (51) auch mit zwi radial verlaufenden und mit der Bohrung (52) verbundenen öffnungen (60, 61) versehen ist und daß jede von ihnen eine Verbindung zu dem ersten Druckraum (18) des entsprechenden Hauptzylinders (1, 2) und zu der Bremse (42, 43) des Rades an der entsprechenden Seite des Fahrzeuges aufweist, und mit einer axial verlaufenden Einlaßöffnung (62) verbunden mit beiden zweiten Druckräumen (20) und mit dem Bremskraftverstärkersystem (46) und mit einer Feder (58) zum Drücken des Ventilteiles (57) in einer ersten Richtung zum Schließen beider radialen öffnungen (60, 61) und zur Trennung der radialen öffnungen (60, 61) von der Einlaßöffnung (62) gegen den Steuerdruck in den zweiten Druckräumen (20), der, wenn beide Hauptzylinder (1, 2) simultan betätigt werden, das Ventilteil (57) in der Bohrung (52) in einer zweiten, der ersten entgegengesetzten Richtung drückt, um die drei öffnungen (60, 61, 62) miteinander in Verbindung zu bringen.

4. Hauptzylinderanordnung nach einem der vorhergehenden Ansprüche, dadurch gekennzeichnet, daß das Ventilteil (59) eine Rolle umfaßt.

5. Hauptzylinderanordnung nach einem der vorhergehenden Ansprüche, dadurch gekennzeichnet, daß das Ventilteil (57) einen Kolben umfaßt.

6. Hauptzylinderanordnung nach einem der vorhergehenden Ansprüche, dadurch gekennzeichnet, daß das Bremskraftverstärkersystem (46) jeweils Bremskraftverstärker an Rädern an gegenüberliegenden Seiten des Fahrzeuges umfaßt.

**Revendications**

1. Ensemble de cylindres maîtres pour un système de freinage hydraulique d'un véhicule comportant une paire de cylindres maîtres (1, 2) qui sont prévus pour être manoeuvrés soit simultanément pour ralentir un véhicule soit indépendamment pour faciliter la direction, dans lequel chaque cylindre maître (1, 2) comporte un piston primaire (5) manoeuvré par une pédale et travaillant dans un alésage (4), un piston secondaire ou flottant (8) travaillant dans une portion de l'alésage (4) située entre le piston primaire (5) et une extrémité fermée de l'alésage (4), un espace sous pression primaire (18) défini dans l'alésage (4) entre le piston primaire et le piston secondaire (5, 8) et un espace sous pression secondaire (20) défini dans l'alésage (4) entre le piston secondaire (8) et l'extrémité fermée de l'alésage (4), les espaces sous pression primaires (18) sont prévus pour être reliés aux freins (42, 43) qui sont sur les roues des côtés opposés du véhicule, les espaces sous pression secondaires (20) sont opérationnels pour commander le fonctionnement d'un système de freinage auxiliaire commun (46) prévu pour ne fonctionner que si l'on manoeuvre simultanément les deux cylindres maîtres (1, 2), chaque piston secondaire (8) comportant un moyen formant passage (17) qui est en communication à tout moment avec un réservoir pour du fluide (14); et des robinets à soupape de récupération primaire et secondaire normalement ouverts (19, 21) assurent la communication entre le moyen formant passage (17) et les espaces sous pression primaire et secondaire (18, 20) lorsque les pistons (5, 8) sont dans leur position rétractée, le fonctionnement simultané des deux cylindres maîtres (1, 2) faisant que les deux paires de robinets à soupape de récupération primaires et secondaires (19, 21) se ferment, ce qui est suivi de la mise sous pression du fluide dans les deux paires d'espace sous pression primaires et secondaires (18, 20), ce qui fait que les freins (42, 43) qui sont sur les côtes opposés du véhicule s'appliquent simultanément et ce qui fait fonctionner le système de freinage auxiliaire (46), et la manoeuvre de l'un des cylindres maîtres (1, 2) à lui seul faisant que les robinets à soupape de récupération primaire et secondaire (19, 21) de ce cylindre maître se ferment, ce qui est suivi de la mise sous pression du fluide dans l'espace sous pression primaire (18), mais le fluide qui de trouve dans l'espace sous pression secondaire (20) étant alors déplace en direction du réservoir (14) en passant par le robinet à soupape de récupération secondaire ouvert (21) de l'autre maître cylindre, celui que l'on n'a pas manoeuvré (1, 2), ce qui interdit le fonctionnement du système de freinage auxiliaire (46), et un ensemble formant robinet de commande (50) est prévu pour commander la communication entre les freins (42, 43) qui se trouvent sur les côtés opposés du véhicule, caractérisé en ce que ledit ensemble formant robinet de commande (50) commande la communication entre lesdits freins (42, 43) et le système de freinage auxiliaire (46) et en ce qu'il est normalement fermé pour isoler l'un de l'autre les freins (42, 43) qui sont sur les côtés opposés du véhicule lorsque l'on manoeuvre à lui seul l'un des cylindres maîtres (1, 2) mais s'ouvre en réponse à la pression produite dans les espaces sous pression secondaires (20) lorsque l'on manoeuvre simultanément les deux cylindres maîtres (1, 2), mettant ainsi les freins (42, 43) qui sont sur les côtés opposés du véhicule en communication l'un avec l'autre et avec le système de freinage auxiliaire (46).

2. Ensemble de cylindres maîtres selon la revendication 1, caractérisé en ce que l'ensemble formant robinet de commande (50) agit comme robinet de transfert pour assurer la communication entre les freins (42, 43) qui sont sur les roues des côtés opposés du véhicule pour compenser l'usure différentielle des garnitures de friction et permet au système de freinage auxiliaire (46) d'être manoeuvré par le fluide provenant des espaces sous pression primaires (18) des deux cylindres maîtres (1, 2).

3. Ensemble de cylindres maîtres selon la revendication 1 ou 2, caractérisé en ce que l'ensemble formant robinet de commande (50) comporte un carter (51) qui présente un alésage axial (52), un élément obturateur (57) qui travaille dans l'alésage axial (52), le carter (51) comportant également une paire d'orifices radiaux (60, 61) qui communiquent avec l'alésage (52) et dont chacun est relié à l'espace sous pression primaire (18) d'un cylindre maître respectif (1, 2) et au frein (42, 43) qui est sur la roue du côté correspondant du véhicule, et un orifice axial d'entrée (62) relié aux deux espaces sous pression secondaires (20) et au système de freinage auxiliaire (46), et un ressort (58) prévu pour pousser l'élément obturateur (57) dans une première direction pour fermer les deux orifices radiaux (60, 61) et isoler les orifices radiaux (60, 61) d'avec l'orifice d'entrée (62), en opposition avec la pression piloté qui règne dans les espaces sous pression secondaires (20), ressort qui lorsque l'on manoeuvre simultanément les deux cylindres maîtres (1, 2) est opérationnel pour pousser 'élément obturateur (57) dans l'alésage (52) dans une seconde direction opposée à la première pour placer les trois orifices (60, 61, 62) en communication l'un avec l'autre.

4. Ensemble de cylindres maîtres selon l'une quelconque des revendications précédentes, caractérisé en ce que l'élément obturateur (52) est constitué d'un tiroir.

5. Ensemble de cylindres maîtres selon l'une quelconque des revendications précédentes, caractérisé en ce que l'élément obturateur (57) est constitué d'un piston.

6. Ensemble de cylindres maîtres selon l'une quelconque des revendications précédentes, caractérisé en ce que le système de freinage auxiliaire (46) comporte des freins auxiliaires sur les roues qui sont sur les côtés opposés du véhicule lui-même.